# DEMANDE DE BREVET EUROPEEN

(11) **EP 4 644 248 A1**
(43) Date de publication de la demande: **05.11.2025**
(21) Numéro de dépôt: 25151040.0
(22) Date de dépôt: 09.01.2025
(51) Int. Cl.: B64D 11/06

(54) **ENSEMBLE DE TABLE REPAS ESCAMOTABLE À CLAPET COULISSANT ET UNITÉ DE SIÈGE COMPRENANT UN TEL ENSEMBLE**

(30) Priorité: 29.04.2024 FR 2404471
(71) Demandeur: Airbus Atlantic, 17300 Rochefort (FR)
(72) Inventeur: CLOET, Frédéric, 17300 ROCHEFORT (FR)
(74) Mandataire: Ipside

(57) **Abrégé**

L'invention concerne un ensemble de table (100), pour siège (210) d'aéronef, comprenant un plateau (10) déployable à l'horizontale face au siège, pour permettre notamment à un passager assis sur ledit siège de prendre un repas, et un mécanisme de verrouillage (64), ledit ensemble de table comprenant un clapet (20) coulissant perpendiculairement au plan du plateau (10) et présentant une position fermée, dans laquelle le plateau (10) est intégralement dissimulé derrière ledit clapet dans un logement de stockage (50), et une position ouverte configurée pour libérer le mécanisme de verrouillage et ainsi éjecter automatiquement le plateau (10) à l'extérieur dudit logement de stockage pour permettre à un passager de saisir et déployer manuellement ledit plateau.

L'invention concerne également une unité de siège d'aéronef comprenant un tel ensemble de table intégré à une console accolée au siège.

## Description

### DOMAINE TECHNIQUE

La présente invention appartient au domaine des équipements d'aménagement intérieur de cabines d'avions, notamment les tables repas déployables. Elle concerne plus particulièrement un ensemble de table repas escamotable à clapet coulissant et une unité de siège passager comprenant un tel ensemble. L'invention trouve une application directe, mais non exclusive, dans les sièges passagers des classes supérieures (classe affaires et première classe) d'avions commerciaux.

### ÉTAT DE L'ART

Les tables repas déployables installées dans les sièges d'avions remontent au tout début de l'aviation commerciale. Cette innovation a permis aux passagers de profiter d'un espace plus confortable pour prendre leurs repas pendant les vols. Depuis lors, les tables repas déployables sont devenues une caractéristique standard dans de nombreux avions commerciaux.

Les documents US10232946 (table ergonomique à tiroir de rangement intégré) et US10625649 (table extensible à plateaux articulés) illustrent quelques exemples de tables repas.

Historiquement, les tables repas ont été conçues pour être déployées à partir d'un accoudoir placé le long du siège, d'une console latéralement adjacente au siège ou de l'arrière du dossier du siège placé juste devant. Dans chacune de ces configurations, il est nécessaire de déplacer la table entre une position de rangement et une position d'utilisation déployée. Les tables déployables à partir d'un accoudoir ou d'une console nécessitent des charnières complexes pour modifier l'orientation de la table en vue de son rangement et de son utilisation, par exemple pour la faire passer de la verticale à l'horizontale. Aussi, les tables qui se déploient sous une structure statique avant nécessitent souvent un mouvement linéaire vers l'avant et vers l'arrière. Étant donné que la plupart des structures statiques avant ont une hauteur différente de la hauteur ergonomique d'une table repas, des mécanismes complexes sont nécessaires pour déployer la table vers l'utilisateur et l'abaisser à la hauteur ergonomique appropriée.

Ces mécanismes complexes peuvent parfois rester visibles dans l'environnement du siège, y compris en position rangée de la table, ce qui nuit à l'harmonie esthétique du siège.

Certaines solutions proposent néanmoins des mécanismes simplifiés et allégés qui se voient moins, mais sans réussir à dissimuler toute la table lorsqu'elle est en position rangée.

En effet, les tables repas de l'art antérieur se démarquent visuellement du design global du siège. Cette dissonance esthétique peut perturber l'harmonie de l'aménagement intérieur de la cabine et créer une expérience visuellement incohérente pour les passagers.

De plus, les tables repas traditionnelles peuvent manquer d'intégration visuelle avec le reste de l'environnement du siège. Leur conception peut ne pas se fondre de manière fluide avec les lignes et les formes des autres éléments du siège, ce qui peut donner une impression de déséquilibre ou de manque d'attention aux détails dans la conception de la cabine, surtout en première classe.

En outre, les tables repas traditionnelles peuvent souvent être perçues comme des ajouts fonctionnels plutôt que comme des éléments de design intégrés. Leur apparence peut sembler utilitaire et peu attrayante.

Il convient ici de noter que l'aspect esthétique est une composante essentielle dans les programmes de développement technique de solutions pour l'aménagement intérieur des cabines d'avion. L'enjeu est d'améliorer l'intégration et l'ergonomie des différents équipements dans un environnement de siège passager, surtout dans les classes supérieures.

### PRÉSENTATION DE L'INVENTION

La présente invention vise à pallier tout ou partie des inconvénients de l'art antérieur exposés ci-avant, en proposant une solution permettant de disposer d'une table repas escamotable, entièrement intégrée au design de l'environnement du siège et d'utilisation facile.

À cet effet, la présente invention a pour objet un ensemble de table, pour siège d'aéronef, comprenant un plateau déployable à l'horizontale face au siège, pour permettre notamment à un passager assis sur ledit siège de prendre un repas, et un mécanisme d'actionnement permettant le rangement et le déploiement dudit plateau. Cet ensemble de table est remarquable ce qu'il comprend un clapet coulissant perpendiculairement au plan du plateau et présentant une position fermée, dans laquelle le plateau est intégralement dissimulé derrière ledit clapet dans un logement de stockage, et une position ouverte configurée pour libérer le mécanisme d'actionnement et éjecter automatiquement le plateau à l'extérieur dudit logement de stockage.

Le clapet coulissant permet ainsi d'escamoter entièrement le plateau lorsqu'il n'est pas utilisé, contribuant ainsi à une apparence esthétique plus harmonieuse dans l'environnement du siège.

De plus, l'éjection automatique du plateau lorsque le clapet est ouvert simplifie le processus pour les passagers, leur permettant de déployer le plateau avec une grande simplicité.

Selon un aspect de l'invention, le clapet coulissant présente une forme qui épouse parfaitement la forme apparente d'un élément de l'environnement du siège, par exemple une console adjacente au siège.

Selon un aspect avantageux de l'invention, le clapet coulissant présente une position ouverte stable permettant de dévoiler le plateau sans provoquer un mouvement dudit plateau, et un coulissement supplémentaire dudit clapet au-delà de la position ouverte stable permet l'éjection du plateau.

Cela offre aux passagers un accès facile au plateau sans provoquer de mouvement involontaire de celui-ci. Cette caractéristique garantit une expérience utilisateur fluide et sécurisée, évitant tout risque de déploiement brusque non désiré du plateau. De plus, le coulissement supplémentaire, qui déclenche l'éjection automatique du plateau, offre une fonctionnalité intuitive et pratique pour les passagers.

Plus particulièrement, le coulissement supplémentaire du clapet pour l'éjection du plateau présente une distance de coulissement inférieure à la distance de coulissement entre la position fermée et la position ouverte stable dudit clapet.

En effet, la distance de coulissement nécessaire pour l'éjection du plateau est inférieure à celle requise pour passer du mode fermé à la position ouverte stable du clapet. Cette particularité permet une manipulation plus aisée du mécanisme d'actionnement du plateau.

Selon un mode de réalisation, l'éjection du plateau sous l'effet de l'ouverture du clapet coulissant est partielle, ledit plateau demeurant partiellement dans son logement de stockage.

Les passagers peuvent ainsi facilement saisir la partie éjectée du plateau et la tirer complètement, rendant le processus de déploiement plus ergonomique et contrôlé.

Selon un mode de réalisation, le plateau est extensible et comporte une base et une extension articulée sur ladite base.

Cette conception permet d'adapter la taille du plateau selon les besoins du passager, offrant ainsi une flexibilité accrue lors de l'utilisation de la table repas en vol.

Selon un mode de réalisation, le plateau est fixé à un support incurvé dont le mouvement entre une position complètement stockée et une position complètement déployée du plateau induit une rotation de 90° dudit plateau dans son plan. Ainsi, le plateau peut être stocké longitudinalement et déployé transversalement par rapport au siège, le tout dans un même plan.

Selon un mode de réalisation, le clapet coulissant comporte une empreinte permettant à un passager d'actionner manuellement le coulissement dudit clapet.

Selon un mode de réalisation, le mécanisme d'actionnement comprend un système de verrouillage et un ressort d'éjection, ledit système de verrouillage comportant un levier et un verrou articulés qui sont configurés pour libérer le plateau lorsque le clapet est en position ouverte et ainsi permettre au ressort d'éjection d'éjecter ledit plateau.

L'invention a également pour objet une unité de siège pour passager d'avion, comprenant un siège, une console adjacente au siège, et un ensemble de table tel que présenté.

Selon un mode de réalisation particulièrement avantageux, l'ensemble de table est intégré à la console et se fond dans la forme de celle-ci.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un ensemble de table escamotable, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : un ensemble de table repas escamotable, en position rangée, installé dans l'environnement d'un siège passager selon un mode de réalisation de l'invention ;
- Figure 2 : l'ensemble de table en position complètement déployée ;
- Figure 3 : des positions consécutives de l'ensemble de table lors de l'éjection automatique du plateau ;
- Figure 4 : des positions consécutives de l'ensemble de table lors du déploiement manuel du plateau, survenant après l'éjection automatique de ce dernier ;
- Figure 5a : un schéma cinématique d'une parte du mécanisme d'actionnement de l'ensemble de table, permettant de maintenir le clapet dans ses deux positions stables : fermée et ouverte ;
- Figure 5b : un schéma cinématique d'une autre partie du mécanisme d'actionnement, permettant d'éjecter et de verrouiller le plateau.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un ensemble de table repas escamotable, principalement destiné à équiper un siège passager en classe affaires ou en première classe d'un avion commercial. Cet exemple, non limitatif, est donné pour une meilleure compréhension de l'invention et n'exclut pas l'utilisation de l'ensemble de table dans un autre environnement, y compris en dehors d'un véhicule de transport.

Dans le contexte de l'invention, le terme « table repas » ou simplement « table » désigne un plateau pliable ou déployable intégré à l'environnement du siège, offrant aux passagers un espace stable pour prendre leurs repas, poser leurs boissons ou utiliser des dispositifs électroniques. La table peut être réglable en hauteur, angle et profondeur (distance par rapport au passager) pour s'adapter aux préférences individuelles des passagers.

La notion « unité de siège » englobe le siège et son environnement immédiat dans la cabine, comprenant notamment une console latérale, où les passagers peuvent trouver des équipements tels que des commandes de divertissement en vol, des prises de courant, des lumières de lecture, des rangements pour les effets personnels, et autres.

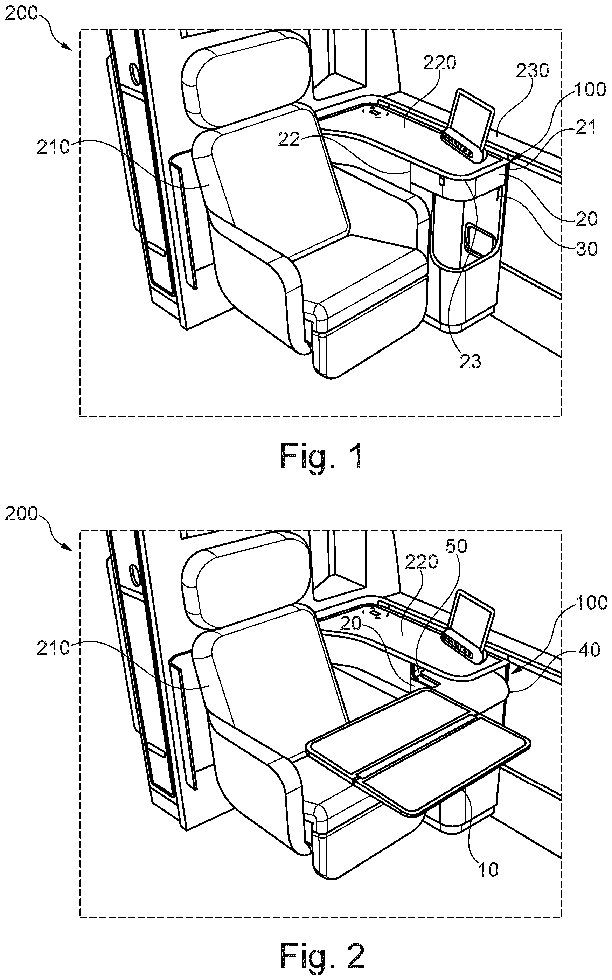

Les figures 1 et 2 représentent un ensemble de table 100 selon un mode de réalisation de l'invention, équipant une unité de siège 200. L'unité de siège 200 comprend principalement un siège 210 et une console 220 latéralement accolée au siège.

Selon un niveau de confort habituel proposé dans les classes supérieures (première classe et classe affaires), le siège 210 est généralement convertible en lit et la console 220 comprend différentes commodités à destination du passager, ces éléments ne faisant toutefois pas l'objet de la présente invention.

L'ensemble de table 100 est escamotable et présente deux positions extrêmes : une position complètement stockée et une position complètement déployée représentées respectivement en figure 1 et en figure 2.

L'ensemble de table 100 comprend un plateau 10, permettant aux passagers de prendre leur repas ou de l'utiliser à d'autres fins lorsque l'ensemble de table est en position déployée, et un clapet coulissant 20 permettant à la fois de dissimuler intégralement le plateau 10 lorsque l'ensemble de table est en position stockée et d'éjecter automatiquement et partiellement ledit plateau comme expliqué plus loin. Lorsqu'il est en position complètement stockée, telle que représentée en figure 1, l'ensemble de table 100 se fond dans la forme et le design de la console 220 afin d'économiser l'espace et surtout de ne pas altérer l'agrément esthétique de l'unité de siège 200.

Le clapet coulissant 20 permet à cet effet d'escamoter le plateau 10 dans un volume intérieur de la console 220 et présente une forme géométrique qui épouse localement la forme de ladite console.

En effet, le clapet coulissant 20 a une forme de coque dont les courbures s'inscrivent dans la continuité des courbures respectives de la console 220. Ainsi, le clapet coulissant 20 apparait faire partie intégrante de la console 220 et donne l'impression d'une uniformité esthétique.

Selon l'exemple de réalisation illustré, le clapet 20 présente une forme cylindrique ouverte à base courbe. Cette courbe se confond avec une partie du contour de la surface supérieure de la console 220 au-dessous de laquelle se trouve le clapet 20, de sorte qu'en vue de dessus, ledit clapet n'est pas visible sous la surface supérieure de la console 220.

Toujours selon le même exemple illustré, le clapet 20 est fixé sur une partie frontale de la console 220, entre sa face latérale accolée à la paroi 230, dite face arrière, et une zone centrale de sa face latérale accolée au siège 210, dite face avant. En effet, le clapet 20 est monté au niveau de la face arrière de la console 220 par un premier côté latéral 21 et se prolonge jusqu'à son deuxième côté latéral 22 situé dans une zone centrale de la face avant de la console, en suivant la courbure extérieure définie par la surface supérieure de ladite console. Cette courbure présente localement une forme en L avec un coin arrondi 23 dans l'exemple illustré.

Le clapet coulissant 20 est ainsi positionné pour être immédiatement accessible au passager lorsqu'il est convenablement assis sur le siège 210.

Le clapet coulissant 20 est monté coulissant dans la console 220, suivant une direction longitudinale de celle-ci, le long d'une glissière 30. La course du clapet coulissant 20 dans son mouvement de translation est limitée et suffit au déploiement du plateau 10. Cette course correspond, tout au plus, à la longueur de la glissière 30.

Le coulissement vers le bas du clapet 20 permet de déployer le plateau 10. Le déploiement du plateau 10 commence par une éjection automatique du plateau 10 provoquée par l'ouverture du clapet 20 et se poursuit manuellement jusqu'à la position complètement déployée telle que représentée sur la figure 2.

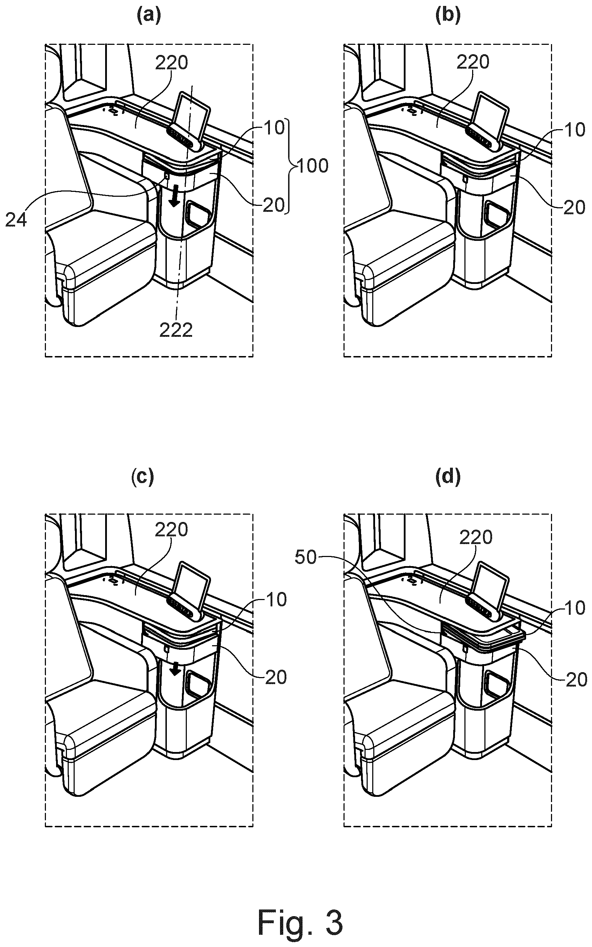

La figure 3 représente l'éjection automatique du plateau 10 avec quelques positions intermédiaires consécutives.

En (a), la flèche pleine pointant vers le bas indique le sens de coulissement du clapet 20 pour commencer le déploiement du plateau 10. Le coulissement se fait suivant une direction longitudinale de la console 220, matérialisée par l'axe 222. Le coulissement peut être facilement actionné par le passager à l'aide d'une empreinte 24 permettant au passager d'avoir une zone de prise avec ses doigts.

Le coulissement du clapet 20 se poursuit jusqu'à une position stable représentée en (b). Le plateau 10 est ainsi découvert mais reste dans sa position stockée immobile.

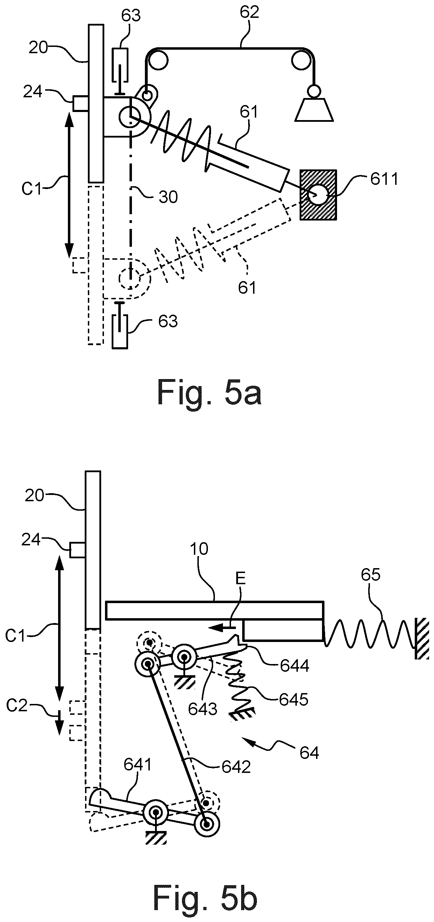

La configuration bistable du clapet 20 entre la position fermée et la position ouverte est assurée par un mécanisme d'actionnement qui sera décrit en référence à la figure 5a.

Un coulissement supplémentaire vers le bas avec une amplitude moindre, indiqué par la flèche pleine en (c), permet d'actionner un mécanisme d'actionnement qui éjecte automatiquement le plateau 10 partiellement en dehors de son logement de stockage 50 comme représenté en (d).

Après le coulissement supplémentaire du clapet 20 qui actionne l'éjection du plateau 10, le clapet revient à sa position stable d'avant coulissement supplémentaire, c'est-à-dire à la même hauteur que la position représentée en (b). Ainsi, le coulissement supplémentaire d'éjection du plateau 10 est un coulissement monostable autour d'une position initiale qui est la position stable du clapet ouvert, et permet de déclencher l'éjection du plateau 10 grâce à un mécanisme d'actionnement adapté qui sera décrit plus loin en référence à la figure 5b.

Alternativement, l'éjection partielle automatique du plateau peut être réalisée par un bouton d'éjection, au lieu du coulissement supplémentaire du clapet. Un tel bouton d'éjection peut être positionné à proximité du plateau, de préférence sous le clapet pour n'être accessible que lorsque le clapet est ouvert. Cela permet d'éviter plus efficacement toute éjection intempestive du plateau.

La figure 3 résume ainsi l'éjection automatique du plateau 10 sous l'action du clapet coulissant 20, ladite éjection amenant le plateau 10 dans une position intermédiaire qui offre une surface suffisante pour permettre une préhension du plateau 10 par le passager et la poursuite du déploiement manuel jusqu'à la position finale de déploiement complet.

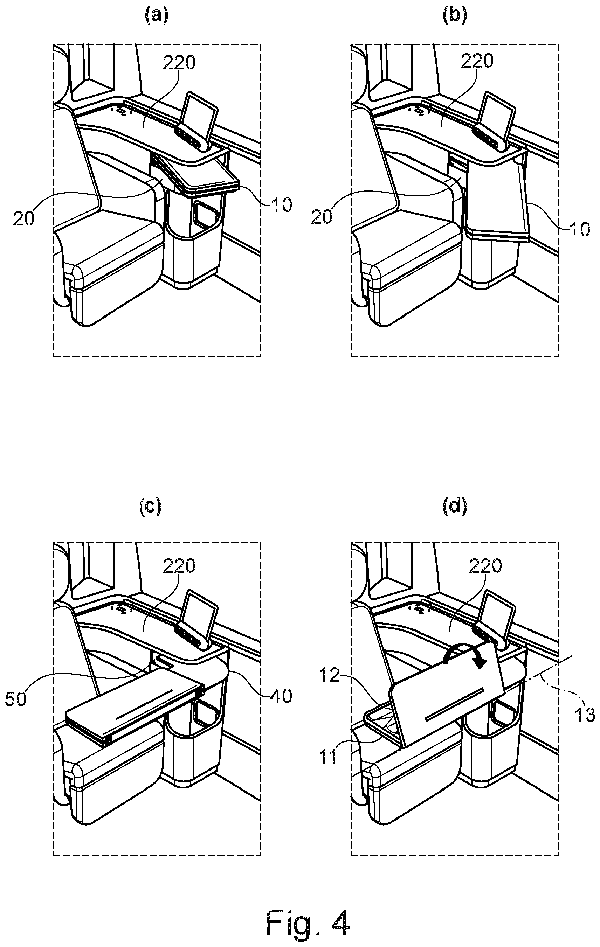

La figure 4 représente le déploiement manuel du plateau 10 avec quelques positions intermédiaires consécutives.

Dans l'exemple de réalisation illustré, le plateau 10 est extensible, en étant pliable, et comporte à cet effet deux parties articulées : une base 11 et une extension 12. Le passager commence par tirer vers lui le plateau 10, en (a) et (b), jusqu'à l'amener devant lui dans une position d'utilisation en (c). L'action du passager induit un mouvement composé de translation et de rotation du plateau 10 conditionné par un support incurvé 40 qui est monté coulissant suivant une ligne incurvée. En effet, le plateau 10 passe d'une position stockée dans laquelle il est sensiblement parallèle à la console 220 à une position déployée dans laquelle il est sensiblement perpendiculaire à ladite console.

Enfin, en (d), le passager déploie l'extension 12 du plateau 10 en la faisant pivoter et basculer de l'autre côté de la base 11, autour d'un axe 13 faisant jonction entre les deux parties dudit plateau. Le basculement de l'extension 12 est indiqué par la flèche circulaire pleine.

À l'issue de ce déploiement du plateau 10, l'ensemble de table 100 arrive dans sa position complètement déployée telle que représentée sur la figure 2. Inversement, le rangement du plateau 10 se fait en suivant les mouvements inverses des figures 3 et 4 dans un ordre inversé.

En effet, en partant de la position complètement déployée de la figure 2, le passager commence par rabattre l'extension 12 du plateau 10 contre la base 11, (d) à (c), puis il pousse le plateau 10 plié dans son logement 50, (b) et (a), pour arriver à la configuration (d) de la figure 3.

La configuration (d) de la figure 3 correspond à la position éjectée du plateau 10. Dans cette position, le passager exerce une pression directe sur le plateau 10 pour l'insérer complètement dans le logement 50. Le plateau 10 rentre et se verrouille comme en configuration (b) de la figure 3.

Enfin, le passager remonte manuellement le clapet 20 jusqu'à sa position fermée de la figure 1.

Les figures 5a et 5b représentent schématiquement, selon un mode de réalisation particulier, le mécanisme d'actionnement permettant de réaliser la cinématique de l'ensemble de table 100 telle que décrite ci-avant. Chacune des deux figures représente une partie de ce mécanisme, pour faciliter la compréhension et éviter une seule figure qui serait illisible avec tout le mécanisme représenté. Ainsi, pour reconstituer le mécanisme d'actionnement dans son intégralité, il suffit de superposer les figures 5a et 5b.

De plus, chaque partie du mécanisme représentée sur l'une des figures 5a ou 5b assure une fonction spécifique et bien définie.

La figure 5a représente la partie du mécanisme responsable de la position bistable du clapet coulissant 20 entre la position fermée (en haut) et la position ouverte (en bas, en trait interrompu).

Le mécanisme d'actionnement comprend à cet effet un système de maintien 61 à ressort, permettant de maintenir le clapet 20 de façon stable soit dans la position fermée soit dans la position ouverte. Le système de maintien 61 est articulé entre l'arrière du clapet 20, mobile, et un axe fixe 611.

Le mécanisme d'actionnement comprend également un compensateur de poids 62 permettant d'assister le mouvement de coulissement C1 du clapet 20 pour un meilleur ressenti lors de la manipulation dudit clapet coulissant, et des amortisseurs de fin de course 63 avec des butées « soft » pour une ouverture et une fermeture en douceur et sans claquement.

Le mouvement de coulissement entre les deux positions stables du clapet 20, matérialisé par la double flèche C1, permet simplement d'ouvrir ou de fermer l'espace de stockage du plateau 10 sans éjecter ce dernier.

La figure 5b représente la partie du mécanisme responsable de l'éjection du plateau 10 et du verrouillage de ce dernier en position stockée.

Après le premier coulissement C1 permettant de faire passer le clapet 20 de sa position fermée à sa position ouverte stable, un deuxième coulissement C2 vers le bas permet d'éjecter le plateau 10 comme décrit plus haut.

Le mécanisme d'actionnement comprend à cet effet un système de verrouillage 64 comportant un levier d'actionnement 641 et un verrou 643 articulés, d'extrémité à extrémité, par une tige 642. Le levier 641 et le verrou 643 sont également articulés, chacun, sur un axe central fixe. Ainsi, lorsque l'utilisateur applique le coulissement supplémentaire C2, le clapet 20 appuie sur l'extrémité libre du levier 641 qui bascule alors autour de son axe fixe d'articulation. Ce mouvement est ensuite transféré au verrou 643 via la tige 642, ledit verrou bascule également dans un sens opposé pour libérer le plateau 10, initialement retenu par l'extrémité libre 644 du verrou 643.

Le mécanisme d'actionnement comprend également un ressort 65 qui éjecte E le plateau 10 lorsque ce dernier est libéré du verrou 643.

Lorsque le plateau 10 est éjecté, le verrou 643 reste bloqué dans sa position ouverte, représentée en trait interrompu, contraignant un ressort de rappel 645.

Inversement, la pression exercée pour rentrer le plateau 10 dans sa position de stockage le fait reculer jusqu'à permettre au ressort de rappel 645 de pousser le verrou 643 dans sa position fermée pour verrouiller à nouveau la position du plateau 10.

Si le coulissement supplémentaire C2 du clapet est remplacé par un bouton d'éjection, ce dernier peut être relié à un mécanisme d'éjection et de verrouillage similaire ou identique à celui décrit en figure 5b, moyennant quelques adaptations triviales.

L'invention telle que décrite concerne un ensemble de table repas intégré à l'environnement d'un siège passager dans un avion. Cet ensemble est conçu pour offrir aux passagers un espace stable pour prendre leurs repas, poser leurs boissons ou utiliser des dispositifs électroniques. La table repas est escamotable et présente deux positions : stockée et déployée. En position stockée, elle se fond dans le design de la console latérale, économisant ainsi de l'espace dans la cabine et préservant l'aspect esthétique de celle-ci. Lorsque la table est déployée, elle offre un plateau pliable avec une base et une extension, adapté pour diverses utilisations. Le déploiement de la table est initié par l'ouverture d'un clapet coulissant et peut être réalisé facilement par le passager. Une fois déployée, la table offre un espace confortable pour les passagers, améliorant ainsi leur expérience en vol. Enfin, le rangement de la table se fait de manière inversée au déploiement, offrant une intégration esthétique dans l'environnement du siège passager.

## Revendications

1. Ensemble de table (100), pour siège (210) d'aéronef, comprenant un plateau (10) déployable à l'horizontale face au siège, pour permettre notamment à un passager assis sur ledit siège de prendre un repas, et un mécanisme d'actionnement (64, 65), ledit ensemble de table étant **caractérisé en ce qu'**il comprend un clapet (20) coulissant perpendiculairement au plan du plateau (10) et présentant une position fermée, dans laquelle le plateau (10) est intégralement dissimulé derrière ledit clapet dans un logement de stockage (50), et une position ouverte configurée pour libérer le mécanisme d'actionnement et éjecter automatiquement le plateau (10) à l'extérieur dudit logement de stockage.

2. Ensemble de table selon la revendication 1, dans lequel le clapet coulissant (20) présente une position ouverte stable permettant de dévoiler le plateau (10) sans provoquer un mouvement dudit plateau, et dans lequel un coulissement supplémentaire dudit clapet au-delà de la position ouverte stable permet l'éjection du plateau (10).

3. Ensemble de table selon la revendication 2, dans lequel le coulissement supplémentaire du clapet (20) pour l'éjection du plateau (10) présente une distance de coulissement inférieure à la distance de coulissement entre la position fermée et la position ouverte stable dudit clapet.

4. Ensemble de table selon l'une quelconque des revendications précédentes, dans lequel l'éjection du plateau (10) sous l'effet de l'ouverture du clapet coulissant (20) est partielle, ledit plateau demeurant partiellement dans son logement de stockage (50).

5. Ensemble de table selon l'une quelconque des revendications précédentes, dans lequel le plateau (10) est extensible et comporte une base (11) et une extension (12) articulée sur ladite base.

6. Ensemble de table selon l'une quelconque des revendications précédentes, dans lequel le plateau (10) est fixé à un support incurvé (40) dont le mouvement entre une position complètement stockée et une position complètement déployée du plateau induit une rotation de 90° dudit plateau dans son plan.

7. Ensemble de table selon l'une quelconque des revendications précédentes, dans lequel le clapet coulissant (20) comporte une empreinte (24) permettant à un passager d'actionner manuellement le coulissement dudit clapet.

8. Ensemble de table selon l'une quelconque des revendications précédentes, dans lequel le mécanisme d'actionnement (64, 65) comprend un système de verrouillage (64) et un ressort d'éjection (65), ledit système de verrouillage comportant un levier (641) et un verrou (643) articulés qui sont configurés pour libérer le plateau (10) lorsque le clapet (20) est en position ouverte et ainsi permettre au ressort d'éjection d'éjecter ledit plateau.

9. Unité de siège (200) pour passager d'avion, comprenant un siège (210) et une console (220) adjacente au siège, **caractérisé en ce qu'**elle comprend un ensemble de table (100) selon l'une des revendications précédentes.

10. Unité de siège selon la revendication 9, dans laquelle l'ensemble de table (100) est intégré à la console (220) et se fond dans la forme de celle-ci.
